# EUROPEAN PATENT APPLICATION

(11) **EP 0 956 762 A2**
(43) Date of publication of application: **17.11.1999**
(21) Application number: 99109020.0
(22) Date of filing: 07.05.1999
(51) Int. Cl.: A01G 3/00, B02C 18/40

(54) **Agricultural shredder**

(30) Priority: 14.05.1998 IT TO980405
(71) Applicant: Omarv di Racca Vittorio & C. snc, 12038 Savigliano (CN) (IT)
(72) Inventor: Racca, Vittorio, 12038 Savigliano (CN) (IT)

(57) **Abstract**

An agricultural shredder comprises an outer housing (10) having a lower front aperture for letting in garden refuse lying on the ground. A collecting rotor (12) rotates about a horizontal axis (x') to send the refuse into an upper zone (14) of the housing. A horizontal rotating drum (15) has blade members (17) radially projecting from the cylindrical surface (16) of the drum and oriented according to planes forming an acute angle with a plane passing by the axis of rotation (x'') of the drum (15), for co-operating in conveying the shredded material towards an end of the drum, near which there is located an aperture (18) for the intake and discharge of the shreds produced by the blades.

## Description

The present invention relates to an agricultural shredder machine for shredding branches and garden refuse resulting from pruning.

Conventionally, garden refuse is gathered manually by means of forks and collected in a hopper located somewhere in the field or garden or street where pruning is effected. From the hopper, the waste falls into a lower chamber where there is provided a chipper rotor fitted with blades radially protruding from the cylindrical surface of the rotor to reduce the wooden waste in shreds.

It is an object of the present invention to provide a high efficiency shredder, allowing to improve and speed up the operations of gathering the waste from the ground, passing the waste into a chamber with a rotor fitted with chipper members, conveying and discharging the shreds in a special collecting receptacle.

This and other objects and advantages, that will become apparent herein after, are attained, in accordance with the present invention, by a shredder machine having the features defined in claim 1.

A preferred but not limiting embodiment of a shredder machine according to the invention will now be described, reference being made to the accompanying drawings, in which:
- FIG. 1: is a perspective view showing the outer housing of the machine;
- FIG. 2: is a schematical cross sectional view of the machine of FIG.1 in a vertical, transversal plane;
- FIG. 3: is a partial perspective view of a chipper rotor which the machine of FIG.1 is provided with;
- FIGs. 4 to 6: are orthographic projections, to an enlarged scale, of a support for a chipper blade to be fitted to the rotor of FIG.3;
- FIGs. 7 to 9: are orthographic projections of a chipper blade to be coupled to the support of FIGs. 4 to 6.

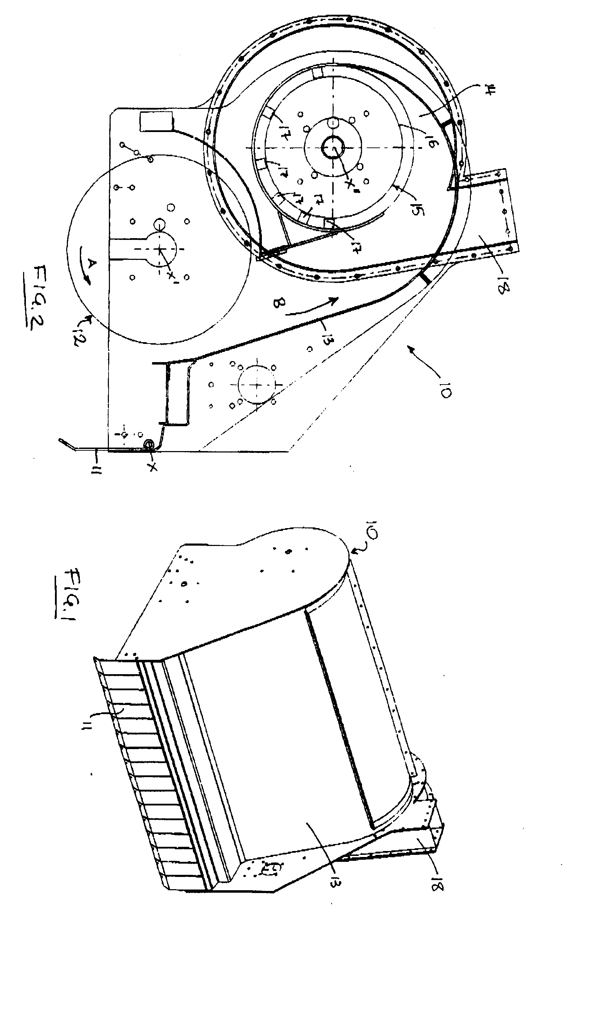

With reference initially to FIG. 1, numeral 10 designates overall the outer housing of a shredder machine designed for being towed by an agricultural tractor (not shown), along a direction of advancement y, herein termed longitudinal. During its advancement, the shredder machine picks up from the ground branches and other garden refuse resulting from pruning, shreds same and collects the shredded material in a special container (not shown) which is towed following the shredder machine.

As used herein, the terms "lateral", "longitudinal" and "transversal" should be interpreted with reference to the direction of advancement y, unless otherwise indicated.

The lower and front part of the machine housing 10 is provided with a lid 11 pivotally mounted about a horizontal axis x, transversal with respect to the direction of advancement y. The lid 11, oscillating about the axis x, allows the garden refuse lying on the ground to enter the housing as this advances.

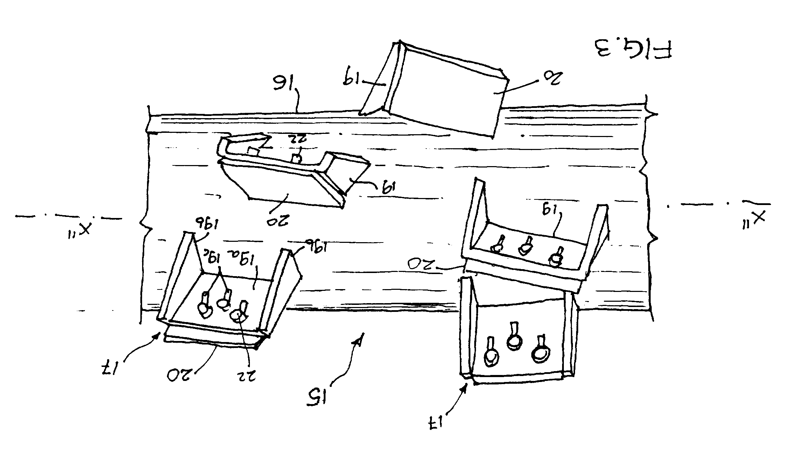

With reference to FIG.2, in the lower part of the housing 10, near to and behind the lid 11 there is mounted a collecting rotor 12, serving essentially as a harrow. The rotor 12 is driven for rotation about a transversal axis x' substantially perpendicular to the direction of advancement y. The rotor 12, by rotating in the direction indicated A in FIG.2, collects from the ground the branches and other garden refuse having entered the housing through the oscillating lid 11 and throws the waste upwardly as indicated by arrow B.

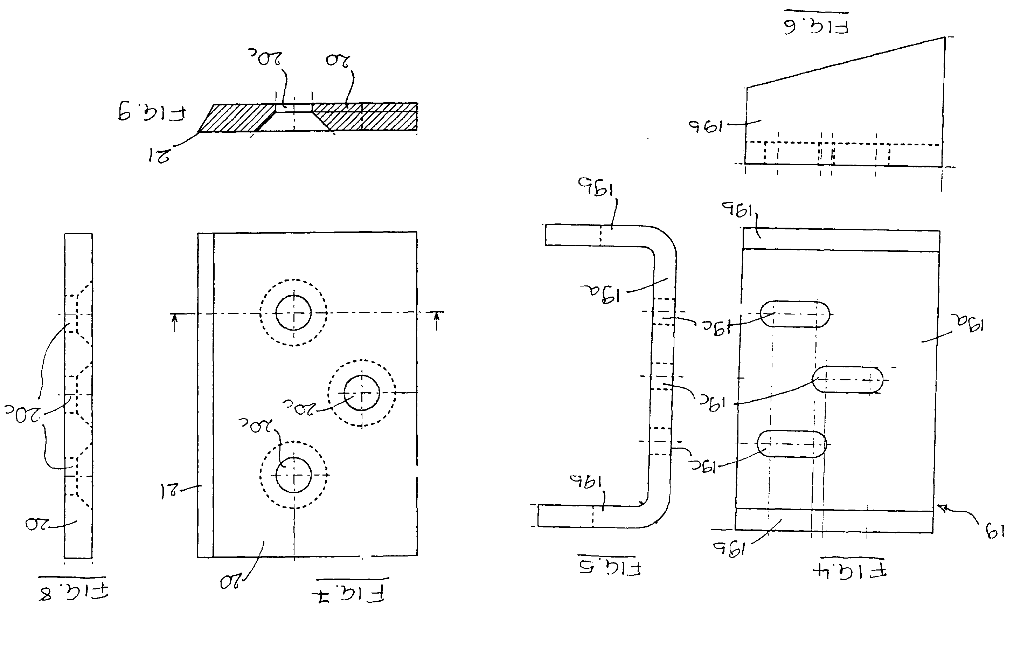

In their upward motion, the waste branches are guided by an outer wall 13 that conveys them in a chamber 14 located in the upper part of the housing 10, where a chipper rotor, indicated overall 15, is mounted and driven for rotation about a transversal axis x''. The rotor 15 comprises a cylindrical drum 16 from which a plurality of blade chipper members 17 projects radially. The blade chipper members 17 are suitably arranged and oriented according to planes disposed at a same concordant angle with respect to the transversal direction of the rotation axis x'' of rotor 15. More particularly, as schematically shown in FIG.3, each blade member 17 lies in a plane forming an acute angle with a plane passing by the central axis of rotation x''.

As the rotor 15 rotates, the blade members 17 come in contact with the refuse conveyed into the chamber 14 and reduce them in shreds. Owing to the common orientation of the blades, the shreds are sent towards one end of the drum, the end to the right as shown in FIG.1. Near this end, the housing 10 forms a discharge aperture 18 through which the shreds are expelled in an essentially vertical tangential direction due to the centrifuging action exerted by the chipper members of rotor 15 on the shreds. In other words, the blade members 17, besides acting as chipper elements, carry out a conveying action in the direction schematically indicated at C in FIG.1, thereby sending the shreds progressively towards the end where the discharge aperture 18 is located. By virtue of the above mentioned orientation, the chipper members produce a transversal conveying effect comparable to that of a helical screw feeder.

Referring now to FIGs. 4 to 6, numeral 19 designates a metal support having a C-shaped cross section adapted for welding to the outer cylindrical surface 16 of the drum. The support 19 allows to mount a blade 20, separately shown in FIGs. 7 to 9, in adjustable manner in a radial direction. The supports 19 are welded to the cylindrical surface 16 such that their central portions 19a are oriented at an acute angle with respect to the transversal direction of the axis x' of rotor 15. Side tab portions 19b allow to weld the support firmly onto the cylindrical surface of the drum, to give the welded support the strength required for withstanding the blows during shredding.

In the central portions 19a of the supports 19 there are formed three radial slots 19c serving as seats for fastening the adjustable blades 20. With reference also to FIGs. 7 to 9, each blade 20 has three holes 20c for co-operating with a corresponding fastening element 22 to be locked also in one respective slot 19c of the support. As apparent, by fastening the blades to the supports 19 so as to increase or reduce the length by which the blade edges 21 protrude from the drum surface 16, the garden refuse is shredded more or less finely, according to requirements.

The exit of shredded material through the aperture 18, and also the conveying motion of the shreds along the drum towards said aperture is promoted by a fan (not shown for simplicity) that intakes the air and the shreds. The air enters the machine through the front lid 11 and follows the path of the shreds passing into the upper chamber 14 (arrow B) as discussed herein above.

The shredder machine of the present invention is suitably mounted on wheels (not shown) for being towed in use by an agricultural tractor or other equivalent vehicle. As already mentioned, the shredder machine is followed by a collecting cart on which the shredded material is loaded through the discharge aperture 18 and a further length of a hose (not shown) conveying the shreds onto the rear cart (not shown).

It will be appreciated that the shredder machine of the present invention allows to simultaneously pick up from the ground the garden refuse, shred same and take away the shreds. As all these operations require the intervention of a single operator only, the tractor driver, a reduction of labour and relative costs is achieved.

## Claims

1. An agricultural shredder comprising:
an outer housing (10) adapted for being towed along a given direction of advancement (y) and having a lower front aperture for letting into the housing garden refuse lying on the ground;
a collecting rotor (12), driven for rotation (A) about an axis (x') transversal to said direction of advancement, for sending said refuse into an upper zone (14) of the housing;
a drum (15) located in said upper zone (14) and rotating about a horizontal axis (x''), the drum having a plurality of blade chipper members (17) radially projecting from the cylindrical surface (16) of the drum;
an aperture (18) for the intake and discharge of the shreds produced by said chipper members;
characterised in that said blade chipper members are oriented according to planes forming an acute angle with a plane passing by the axis of rotation (x'') of the drum (15), for co-operating in conveying the shredded material towards an end of the drum, at which end said discharge aperture (18) is located.

2. A shredder according to claim 1, characterised in that each of said chipper members includes a support (19) welded to the cylindrical wall (16) of the drum, each support (19) having a C-shaped cross section with two side tab portions (19b) and a central portion (19a) oriented according to a plane forming an acute angle with a plane passing by the rotation axis (x'') of the drum (15).

3. A shredder according to claim 2, characterised in that formed in said central portion (19a) are radial openings (19c) for adjustably mounting a blade means (20).

4. A shredder according to claim 1, characterised in that the discharged aperture is associated with an intake fan.

5. A shredder according to claim 4, characterised in that the discharge aperture is adapted for connection by means of a hose to a shred container towed behind the shredder.
